# FASCICULE DE BREVET EUROPEEN

(11) **EP 0 810 837 B1**
(45) Date de publication et mention de la délivrance du brevet: **20.01.1999**
(21) Numéro de dépôt: 96904165.6
(22) Date de dépôt: 21.02.1996
(51) Int. Cl.: A47J 31/06

(54) **DISPOSITIF DE FIXATION D'UNE COUPE PORTE-FILTRE SOUS LE PORTE-COUPE D'UNE MACHINE A CAFE**
VORRICHTUNG ZUM BEFESTIGEN EINES FILTERTRÄGERS AUF DIE BRÜHGLOCKE ERNER KAFFEEMASCHINE
DEVICE FOR MOUNTING A FILTER LADLE UNDER A COFFEE MACHINE LADLE HOLDER

(30) Priorité: 21.02.1995 FR 9501961
(43) Date de publication de la demande: 10.12.1997
(73) Titulaire: Levi, Mario, F-06200 Nice (FR); Levi, Jean-Pierre, F-06200 Nice (FR)
(72) Inventeur: Levi, Mario, F-06200 Nice (FR); Levi, Jean-Pierre, F-06200 Nice (FR)
(74) Mandataire: Hautier, Jean-Louis
(86) Numéro de dépôt international: FR9600270
(87) Numéro de publication internationale: WO9625870

(56) Documents cités:
- BE-A- 894 192
- CH-A- 162 960
- DE-B- 1 077 843
- FR-A- 574 079
- FR-A- 666 825

## Description

L'invention concerne un dispositif de fixation d'une coupe porte-filtre sous le porte-coupe d'une machine à café.

*Sur les machines à café actuelles, les coupes porte-filtre sont introduites dans un logement cylindrique entourant le tassoir muni de sa grille douchette d'arrivée d'eau.*

*La fixation d'une coupe porte-filtre dans ledit logement cylindrique est obtenue par l'intermédiaire d'un système à baïonnette combiné à des rampes hélicoïdales permettant d'obtenir simultanément, le tassement progressif de la dose de café moulu, préalablement introduite dans le filtre, avant la solidarisation de la coupe porte-filtre à la machine à café, et l'étanchéité entre le bord de la coupe porte-filtre et le joint de coupe situé autour du tassoir, dans le fond du logement. C'est le cas avec les documents FR-A-666.825, BE-A-894.192, FR-A-574.079 et DE-B-1.077.843.*

*Pour cela, la coupe porte-filtre comporte, à sa périphérie, deux bossages diamétralement opposés, destinés à s'engager dans les espaces laissés libres entre deux rampes hélicoïdales, situées à la base et à l'intérieur du logement cylindrique. On comprend qu'il suffit, après avoir introduit une coupe porte-filtre dans ledit logement et avoir engagé les bossages qu'elle comporte sur l'extrémité inférieure des rampes, d'exercer, sur ladite coupe* *porte-filtre, à l'aide du manche dont elle est munie, un couple de rotation de sens et d'intensité suffisants pour obtenir, à la fois, la solidarisation temporaire de la coupe porte-filtre avec le logement cylindrique, le tassement de la dose de café et un écrasement suffisant du joint de coupe pour assurer l'étanchéité.*

*La désolidarisation de la coupe porte-filtre, après écoulement de l'infusion dans la ou les tasses, s'effectue beaucoup plus aisément puisqu'il suffit d'exercer un choc de sens contraire sur le manche de la coupe, pour obtenir le décollement du bord de la coupe par rapport au joint de coupe et le glissement, en sens inverse, des bossages sur les rampes hélicoïdales, jusqu'à désengagement complet.*

De tels dispositifs, bien qu'ils donnent, dans l'ensemble, satisfaction sur un plan strictement fonctionnel, présentent cependant quelques inconvénients importants, qu'il importe de souligner.

Tout d'abord, l'utilisateur doit assurer un positionnement précis de la coupe porte-filtre par rapport au logement, pour obtenir l'engagement des bossages sur l'extrémité des rampes, qui sont, par construction, masquées à sa vue.

Ensuite, un effort assez important doit être exercé sur le manche de la coupe porte-filtre, pour obtenir l'engagement complet dudit porte-filtre dans son logement, cet effort doit être suffisant pour vaincre les résistances de frottement entre bossages et rampes ; il en résulte une certaine fatigue cumulée pour les personnes appelées, par leur métier, à faire un usage journalier répété de machines à café de ce dispositif traditionnel.

De plus, les rampes hélicoïdales sont masquées à la vue de l'opérateur, ce qui est également le cas de la grille douchette, du tassoir et surtout du joint de coupe, qui, se trouvant au fond de l'espace annulaire délimité par le logement et le tassoir, ne peuvent être que très difficilement inspectés, nettoyés et remplacés.

Il résulte de cette situation que ces dispositifs, compte tenu de leur difficulté d'accès, ne sont pas faciles à nettoyer et ne satisfont pas aux exigences des règles et normes de construction pour assurer l'hygiène et l'utilisation des matériels à usage alimentaire (Norme Française Unifiée 60.010 et Norme USA NSF (National Sanitation Foundation) standard 4 notamment).

De plus, ce type de construction requiert la réalisation de pièces de forme assez complexe, difficiles à réaliser et, par conséquent, très coûteuses.

*On connaît déjà, par le document CH-A-162.960, un dispositif remédiant partiellement à certains des inconvénients cités ci-dessus. Le logement comporte deux échancrures diamétralement opposées, débouchant vers l'extérieur ; chaque échancrure matérialisant deux rampes hélicoïdales, opposées et symétriques. Les bossages de fixation de la coupe porte-filtre sont remplacés par des porte-galets Ainsi, les difficultés d'engagement sont, en grande partie, supprimées, puisque l'entrée des échancrures du logement et les porte-galets de la coupe porte-filtre restent en permanence visibles de l'extérieur, et par conséquent, par l'opérateur. S'ajoute à cela que les coupes porte filtre peuvent être indifféremment serrées contre le joint de coupe vers la gauche ou vers la droite.*

Toutefois les difficultés de nettoyage subsistent, puisque le tassoir, et surtout le joint de coupe, restent masqués à la vue et difficiles d'accès.

La présente invention a pour but de remédier à ces inconvénients. Cette invention, telle qu'elle est caractérisée, résout le problème consistant à créer un dispositif de fixation de coupe porte-filtre sous le porte-coupe d'une machine à café, avec lequel, d'une part, l'engagement et le serrage soient aisés, et d'autre part, les organes essentiels tels que rampes de serrage, grille de douchette, tassoir, et surtout joint de coupe, restent visibles et très accessibles.

Le dispositif de fixation d'une coupe porte-filtre sous le Porte-coupe d'une machine à café, comportant des bossages diamétralement opposés à la périphérie de la coupe porte-filtre et des éléments d'appui fixés sous le porte-coupe et coopérant avec les bossages pour obtenir, sous l'effet de la rotation de la coupe porte-filtre, un rapprochement de cette dernière du porte-coupe se terminant par l'écrasement d'un joint d'étanchéité fixé sous le porte-coupe, se caractérise, selon l'invention, en ce que la face de contact des bossages est conformée en hélice, d'axe confondu avec l'axe de rotation de la coupe porte-filtre, et en ce que les éléments d'appui fixés sous le porte-coupe sont constitués de deux axes épaulés, disposés symétriquement par rapport à l'axe du porte-coupe.

Selon un mode de réalisation préférentiel des bossages, la face de contact conformée en hélice est réalisée en deux parties de pas différents, dont celle située du côté du bord d'attaque a le pas le plus fort et couvre un secteur permettant d'obtenir, par la rotation correspondante de la coupe porte-filtre, une mise en contact rapide du bord de la coupe avec le joint de coupe.

Préférentiellement aussi, les axes épaulés sont montés libres en rotation.

Les avantages obtenus, grâce à cette invention, consistent, essentiellement, en ceci, que le nettoyage du porte-coupe est aisé et satisfait aux normes de sécurité, compte tenu de l'accès direct au joint de coupe pour son nettoyage ou son remplacement, que la mise en oeuvre est facile grâce à une zone d'introduction largement ouverte, et que la construction est simplifiée, donc plus économique.

D'autres caractéristiques et avantages apparaîtront dans la description qui va suivre, d'un mode de réalisation d'un dispositif de fixation de coupe porte-filtre sous le porte-coupe d'une machine à café, réalisé selon l'invention, donné à titre d'exemple non limitatif au regard du dessin annexé.
La figure 1 représente une vue de face partielle en coupe d'un porte-coupe sous lequel est fixée une coupe porte-filtre.
La figure 2 représente une vue de dessus du dispositif de fixation, selon la figure 1.
La figure 3 représente une coupe porte-filtre selon l'invention en vue latérale.
Enfin, la figure 4 représente une vue en perspective d'une machine à café utilisant l'invention, la figure mettant en évidence la phase d'approche de la coupe porte-filtre et la phase de blocage en position de ladite coupe au niveau de la machine à café.

Les figures représentent un dispositif de fixation de coupe porte-filtre sous le porte-coupe 20 d'une machine à café, dont la coupe porte-filtre 10 est munie de deux bossages latéraux 11 et 12, dont la face de contact hélicoïdale est réalisée en deux parties 13 et 14 de pas différents, et est destinée à prendre appui sur l'épaulement 31 d'axes épaulés 30 fixés sous le porte-coupe 20.

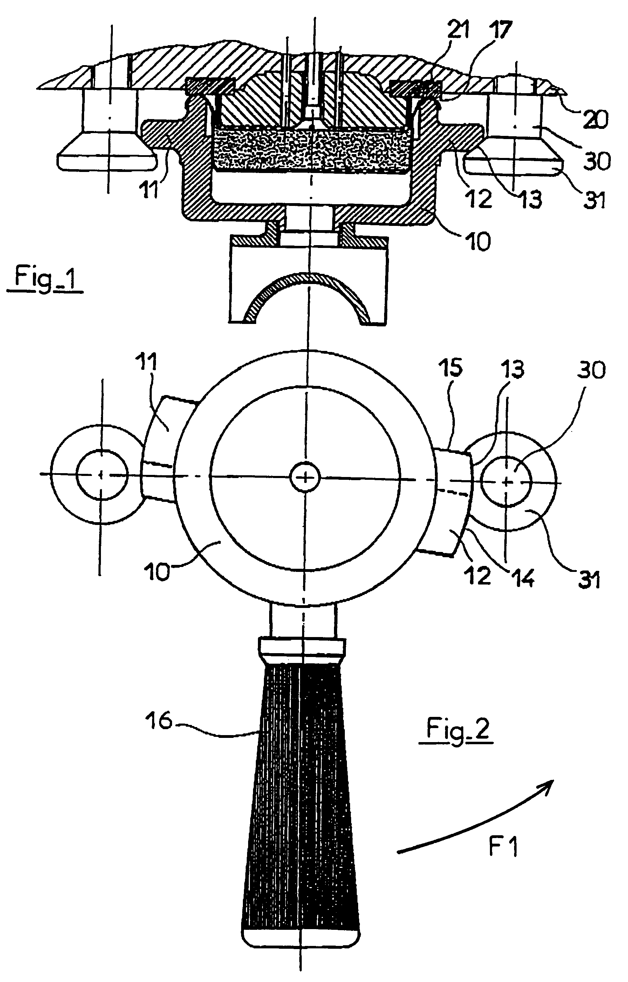

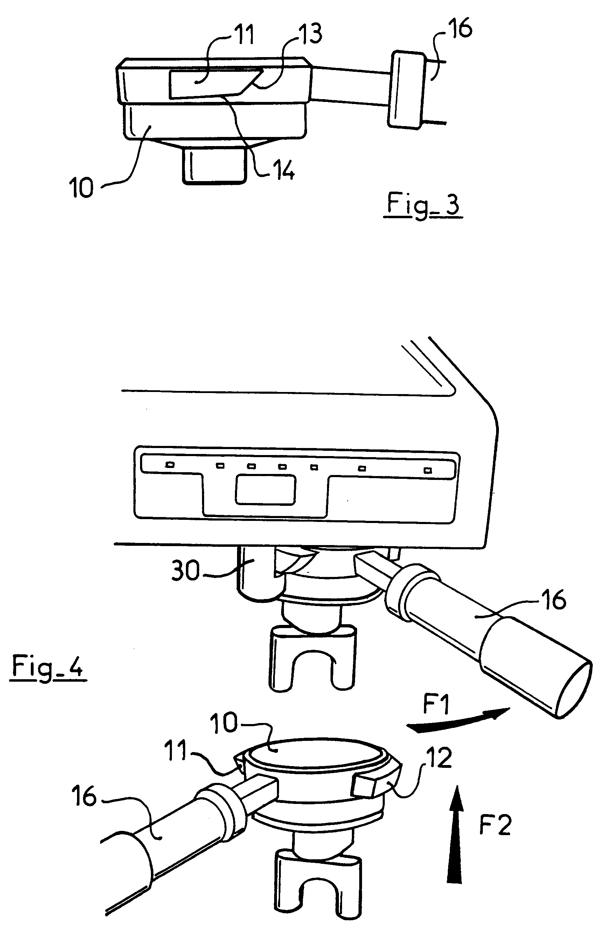

En examinant plus en détail les figures 1 et 2, on remarque, tout d'abord sur la figure 2 et la figure 4 selon F2, qu'une très grande latitude de présentation de la coupe porte-filtre 10 par rapport aux axes épaulés 30 est permise, puis, en se rapportant à la figure 1, que les faces de contact 13 et 14 des bossages 11 et 12 viennent, en accentuant la rotation de la coupe porte-filtre 10, en contact par son bord d'attaque 15 sur l'épaulement 31 des axes épaulés 30, puis, en poursuivant cette rotation par action sur le manche 16, ladite coupe porte-filtre se soulève rapidement, par franchissement relatif de la partie avant 13 de la face de contact de bossages 11 et 12 par l'épaulement 31 des axes épaulés 30. Compte tenu du pas important donné à cette partie hélicoïdale, l'engagement de la partie arrière 14 de la face de contact permet, compte tenu de son faible pas, d'obtenir un écrasement suffisant du joint de coupe 21 par le bord 17 de la coupe, pour un faible effort appliqué horizontalement sur le manche 16 de la coupe porte-filtre 10.

La figure 3 met en évidence la forme très particulière des bossages latéraux 11 et 12 qui permettent la fixation de la coupe porte-filtre 10 au niveau des axes épaulés 30. Chaque bossage 11 ou 12 comporte deux faces de contact 13 et 14.

La première face de contact 13 possède un grand pas, puisque l'angle d'inclinaison par rapport à l'horizontal est compris entre 30 et 40°.

De manière courante, un angle de 35° est des plus intéressants.

La seconde face de contact 14 possède un petit pas, puisque l'angle d'inclinaison toujours par rapport à l'horizontal est de quelques degrés, soit 1 à 5°.

Lorsque la poignée 16 est mue en rotation selon F1, le pas important de la face de contact 13 permet le rapprochement très rapide de la coupe porte-filtre 10 du porte-coupe 20, alors que le pas plus faible de la face 14 permet le serrage efficace, car le dosage de l'effort fourni est facile à régler pour l'utilisateur, de ladite coupe 10 sur le porte-coupe 20.

### REFERENCES

- 10-: Coupe porte-filtre
- 11-: Bossage
- 12-: Bossage
- 13-: Face de contact à pas important du bossage 11 ou 12
- 14-: Face de contact à pas faible du bossage 11 ou 12
- 15-: Bord d'attaque du bossage 11 ou 12
- 16-: Manche
- 17-: Bord de la coupe 10
- 20-: Porte-coupe
- 21-: Joint de coupe
- 30-: Axe épaulé
- 31-: Epaulement de l'axe 30
- F1-: Approche de la coupe porte-filtre 10 d'une machine à café
- F2-: Blocage en position de la coupe porte-filtre 10 sur la machine à café

## Revendications

1. Dispositif de fixation d'une coupe porte-filtre sous le porte-coupe d'une machine à café, comportant des bossages (11,12) diamétralement opposés à la périphérie de la coupe porte-filtre et des éléments d'appui fixés sous le porte-coupe (20) et coopérant avec les bossages pour obtenir, sous l'effet de la rotation de la coupe porte-filtre, un rapprochement de cette dernière du porte-coupe se terminant par l'écrasement d'un joint d'étanchéité fixé sous le porte-coupe (20), caractérisé en ce
que la face de contact (13,14) des bossages (11,12) est conformée en hélice, d'axe confondu avec l'axe de rotation de la coupe porte-filtre (10), et
que les éléments d'appui fixés sous le porte-coupe (20) sont constitués de deux axes épaulés (30), disposés symétriquement par rapport à l'axe du porte-coupe (20).

2. Dispositif, selon la revendication 1, caractérisé en ce
que la conformation en hélice de la face de contact des bossages (11, 12) est réalisée en deux parties (13, 14) de pas différents, dont celle située du côté du bord d'attaque (15) a le pas le plus fort.

3. Dispositif, selon la revendication 2, caractérisé en ce
que la partie (13) conformée en hélice de plus grand pas, située du côté du bord d'attaque (15) des bossages (11, 12), couvre un secteur permettant d'obtenir, par la rotation correspondante de la coupe porte-filtre (10), une mise en contact rapide du bord (17) de la coupe (10) avec le joint de coupe (21).

4. Dispositif, selon la revendication 1, caractérisé en ce
que les axes épaulés (30) sont libres en rotation.

## Claims

1. Device for securing a filter-carrying cup below the cup carrier of a coffee machine, comprising diametrically opposed projections (11, 12) on the periphery of the filter-carrying cup and bearing elements fixed below the cup carrier (20) and coacting with the projections to obtain, under the influence of rotation of the filter-carrying cup, an approach of this latter to the cup carrier terminating in the penetration of a sealing joint fixed below the cup carrier (20), characterized in
that the contact surface (13, 14) of the projections (11, 12) is helical, with an axis coinciding with the axis of rotation of the filter-carrying cup (10), and
that the bearing elements fixed below the cup carrier (20) are constituted of two shouldered axles (30), disposed symmetrically relative to the axis of the cup carrier (20).

2. Device, according to claim 1, characterized in
that the helical configuration of the contact surface of the projections (11, 12) is in two portions (13, 14) of different pitches, of which that located on the attack edge side (15) has the steeper pitch.

3. Device, according to claim 2, characterized in
that the portion (13) of helical shape with steepest pitch, located on the attack edge side (15) of the projections (11, 12), covers a sector permitting obtaining, by corresponding rotation of the filter-carrying cup (10), a rapid contact of the edge (17) of the cup (10) with the joint (21) of the cup.

4. Device, according to claim 1, characterized in
that the shouldered axles (30) are free to rotate.

## Patentansprüche

1. Vorrichtung zur Befestigung einer Filterhalter-Schale unter den Schalenträger einer Kaffeemaschine, mit diametral entgegengesetzten Vorsprüngen (11,12) am Umfang der Filterhalter-Schale und unter dem Schalenträger (20) befestigten Führungselementen, welche mit den Vorsprüngen zusammenarbeiten mit dem Ziel, diese Filterhalter-Schale an den Schalenträger unter der Wirkung der Drehbewegung zu nähern, die im Zusammendrücken einer unter dem schalenträger (20) befestigten Dichtung endet, dadurch gekennzeichnet, daß
die Kontaktfläche (13, 14) der Vorsprünge (11,12) schraubenartig ausgebildet ist und deren Achse der Drehachse der Filterhalter-Schale (10) entspricht und daß
die unter dem Schalenträger (20) befestigten Führungselemente aus zwei abgesetzten Achsen (30) bestehen, die im Verhältnis zur Achse des Schalenträgers (20) symmetrisch angeordnet sind.

2. Vorrichtung nach Anspruch 1, dadurch gekennzeichnet, daß
die schraubenartige Ausbildung der Kontaktfläche der Vorsprünge (11,12) aus zwei Teilen (13, 14) mit verschiedenen Gewindegängen besteht und der am Eingriffsrand (15) gelegene Teil einen größeren Gewindegang besitzt.

3. Vorrichtung nach Anspruch 2, dadurch gekennzeichnet, daß
der schraubenartig ausgebildete und am Eingriffsrand (15) der Vorsprünge (11,12) liegende Teil (13) mit dem größeren Gewindegang einen Bereich deckt, in dem durch die entsprechende Drehbewegung der Filterhalter-Schale (10) ein schneller Kontakt des Rands (17) der Schale (10) mit der Schalendichtung (21) erreicht werden kann.

4. Vorrichtung nach Anspruch 1, dadurch gekennzeichnet, daß
die abgesetzten Achsen (30) sich frei drehen.
